Europäisches Patentamt

European Patent Office

Office européen des brevets

(11) Publication number: **0 195 150**
**B1**

(12) **EUROPEAN PATENT SPECIFICATION**

(45) Date of publication of patent specification: **31.05.89**    (51) Int. Cl.⁴: **F 16 B 7/00**

(21) Application number: **85301970.1**

(22) Date of filing: **21.03.85**

(54) Torque tube assembly.

(43) Date of publication of application:
**24.09.86 Bulletin 86/39**

(45) Publication of the grant of the patent:
**31.05.89 Bulletin 89/22**

(84) Designated Contracting States:
**DE FR GB IT NL SE**

(56) References cited:
**CH-A- 129 362**
**DE-B-1 107 749**
**US-A-2 596 885**
**US-A-3 642 311**
**US-A-3 837 755**

(73) Proprietor: **GRUMMAN AEROSPACE CORPORATION**
**South Oyster Bay Road**
**Bethpage, NY 11714 (US)**

(72) Inventor: **Arena, Aldo**
**3 Lonni Lane**
**Smithtown New York 11787 (US)**
Inventor: **Benoit, Robert L.**
**49 Chatham Drive**
**Oakdale New York 11769 (US)**

(74) Representative: **Crawford, Fiona Merle et al**
**Elkington and Fife Beacon House 113 Kingsway**
**London WC2B 6PP (GB)**

EP 0 195 150 B1

Courier Press, Leamington Spa, England.

## Description

The present invention relates to the assembly and attachment of tubular parts to mating members and, more particularly, to the assembly and attachment of metal tubes to end fittings to form torsion members.

It is common practice such as, for example, for use in aircraft and aerospace vehicles, to make torque or torsion members by connecting the ends of a tubular member to preformed members formed and adapted to fasten and interconnect the assembled torque or torsion member to the elements between which torque or torsion is to be transmitted. The tubular member transmits the torque or torsion between the preformed end members and allows for a substantial reduction in the overall weight of the assembly. This is, of course, of substantial importance in aircraft and aerospace vehicles.

Various arrangements have, heretofore, been employed in interconnecting the ends of the tubular member to be preformed ends. Thus, the surface of the preformed ends to be mated with the tube have been provided with teeth, serrations or grooves and the tube end which is slipped over the teeth, serrations or grooves, has been crimped or compressed causing the teeth, serrations or grooves to bite into the inner tube wall. To be effective in such arrangements, the mating surface and inner tube wall must fit snugly and close production tolerances are required. Furthermore, the teeth, serrations or grooves biting into the inner tube wall and the tool used to crimp or compress the tube onto the end member cause stress points or areas on the tube which, during use, can result in fatigue or stress failures. In an aircraft or aerospace vehicle such failures are, of course, undesirable.

CH—A—129 362 describes a method of connecting, for example, two shafts, in which the end of one bearing circumferential recesses is located with a tight fit within a cavity in the other. The latter shaft is then pressed onto the former such that its constituent material enters the recesses to join the two shafts.

U.S. Patent No. 3,837,755 shows and describes a tubular control or pushrod in which a tubular member is connected, at its ends, to fitting members provided with circumferential grooves of specified width, depth and side wall configuration. The tube end is slipped over the grooves and the tube is compressed into the grooves. The control or pushrod of that patent is for axial operation and replaces a rivet attachment. When actuated axially, according to the patent, the grooved arrangement of the patent has an axial failure strength almost three times the axial strength of the conventional riveted control rod.

It has been discovered that the grooving and forming arrangement of U.S. Patent No. 3,837,755 can be adapted to torque or torsion transmitting tubes and a member can be produced wherein the torque or torsion strength of the tube at the end connection exceed the torsional buckling and failure strength of the tube, itself. It has been discovered that, by extending the grooves axially of the tube and by maintaining the groove side walls at an angle within prescribed limits, the number of grooves to the outer diameter of the end fitting and groove width at a prescribed ratio, the groove depth to the groove width within a prescribed ratio and the axial length of the grooves longer than the circumferential groove width, advantageous embodiments of the present invention can be attained.

According to the present invention there is provided a torque tube assembly comprising a pair of end members interconnected by a tubular member, each of said end members having a male extension extending into said tubular member, said male members each having a plurality of axial grooves spaced equidistant circumferentially around said male member with shoulders at the opposite axial ends of said grooves, the inner wall of said tubular member resting on said shoulders, end portions of said tubular member intermediate said shoulders being recessed into said groovss and forming a torque transmitting interconnection therebetween, each of said axial grooves defined by a plurality of straight side walls and a bottom member intersecting said side walls, characterised in that said side walls diverge outwardly from said bottom member and are equally angularly sloped with respect to a vertically disposed plane normal to a horizontally disposed plane passing through intersections of said side walls and an outer surface of said end members, said intersections of said side walls with said outer surface and said bottom member each having a radius, the assembly being such that the torsional strength of the end connection exceeds the torsional strength of the tube.

Embodiments of the present invention will now be described, by way of example, with reference to the accompanying drawings, in which:

Figure 1 is a side view, broken and partly in section, of an embodiment of a torque or torsion tube of the present invention;

Figure 2 is a cross sectional view taken at 2—2 in Figure 1;

Figure 3 is an enlarged view of a portion of the cross section in Figure 2; and

Figures 3a and 3b are views similar to Figure 3 but showing the base of the groove curved outwardly and curved inwardly, respectively.

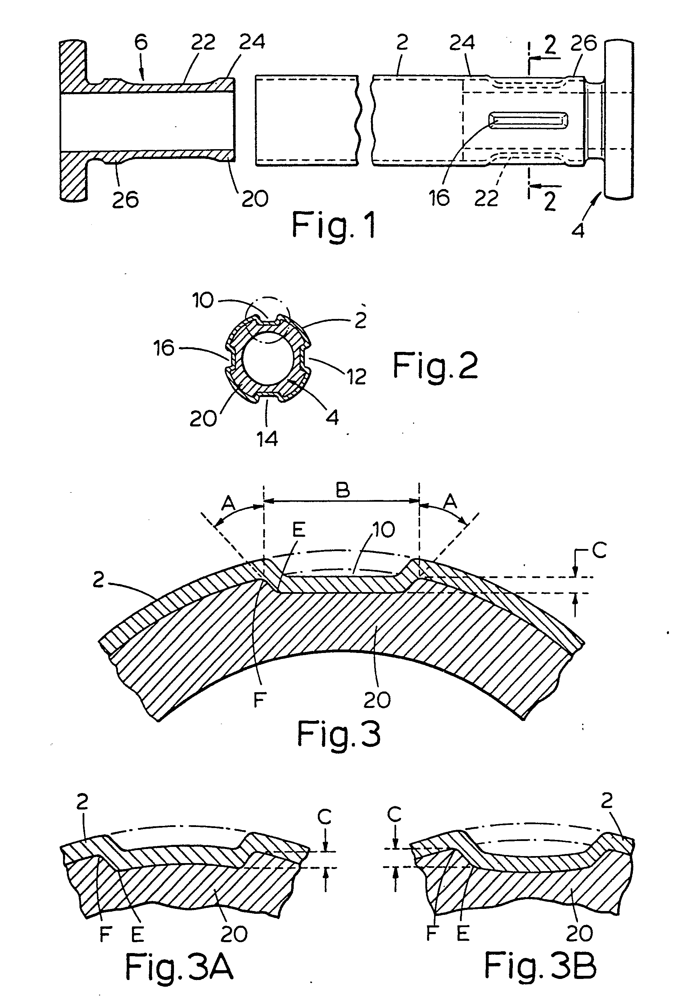

Figure 1 shows a tube 2, which may be of standard wall thickness, for example, aluminum tubes having wall thickness of 0.058 in (1.473 mm) and tubes having a wall thickness of 0.095 in (2.413 mm) have been used, connected in accordance with the invention to an end member 4 and before assembly into a vehicle, for example, at its other end to a second end member 6. In the illustrated embodiment, the end members 4 and 6 are identical. However, the end members may be of different configuration if required by the end use for which the unit is assembled.

In the present embodiment, the end members 4 and 6 are each provided with four grooves, equally spaced around the circumference thereof, for example, grooves 10, 12, 14, 16 as shown in end member 4 in Figure 2, and extending axially therealong. The open end of tube 2 is slipped over the male end 20 of the end member 4, 6 and over the axially extending and circumferentially spaced grooves 10, 12, 14, 16 and is compressed thereinto as will be described later. As can be seen from Figure 1, the male end 20 of the end member 4, 6 is axially grooved at 22, between shoulders 24, 26. Grooves 10, 12, 14, 16 extend axially between shoulders 24, 26. In assembling the torque tube, the open end of tube 2 is slipped over shoulders 24, 26 and rests thereon when tube 2 is compressed. The depth of the grooves at 22 is selected so that the end of tube 2 can be compressed, as hereinafter described, and thereby recessed into grooves 10, 12, 14, 16 without appreciable stretching, thinning or weakening of the tube wall and, at the same time, without buckling of the wall end of the tube.

As will be understood from Figures 2 and 3, after tube 2 is slipped over male end 20 and onto shoulders 24, 26, the end of tube 2 which extends over grooves 10, 12, 14, 16, is compressed, forcing the material of the tube 2 to conform to the contour of the grooves 10, 12, 14, 16 so as to be recessed therein without substantial stretching or thinning of the tube wall thickness. Compressing the tube end to the contour of the grooves 10, 12, 14, 16 can be accomplished by swaging, by explosion forming, by rubber press forming and electromagnetically. Tool marking of the tube wall should be avoided. Preferably, the tube end is compressed and the contouring of the tube wall to the grooves of the end member is accomplished electromagnetically.

In the present embodiment, and with reference to Figure 3, groove angle A should not be substantially less than 5° and not substantially more than 60°, the groove length B should not be substantially less than 0.15 in (3.81 mm) and not be substantially greater than 0.45 in (11.43 mm), and the depth C of the groove, as measured vertically at the edge of the groove, should not be less than 0.02 in (0.508 mm) and not substantially greater than 0.10 in (2.54 mm). The edges of the groove at E and F and at the forward and rearward groove ends should have a radius between about 0.01 in (0.254 mm) to about 0.15 in (3.81 mm). A groove side wall and end wall angle of 41.4±0.5°, a groove width of 0.298—0.302 in (7.569—7.671 mm), a groove depth of 0.034±0.002 in (0.864±0.051 mm) and a radius of 0.020 in 0.30 in (0.508—7.62 mm) has been demonstrated to be the preferred arrangement for a satisfactory torque or torsion tube for most aircraft and aerospace vehicle use.

In the practice of the invention, the ratio of the number of grooves and outer diameter of the end member or fitting to the groove width, the ratio of groove depth to groove width and groove length to groove width is important. Thus, the number of grooves divided by the outer diameter of the end member or fitting should be equal to or less than 2.1 divided by the groove width, the depth of the groove, as measured at C, Figure 3, divided by the groove width, measured at B, Figure 3, should be equal to or less than 2.0; and, the length of the groove should be greater than the groove width.

In addition to high torque strength, the torque or torsion tube of the present invention, electromagnetically assembled, is assembled at a lower cost than conventional crimping techniques. More consistent high conformity of tube to groove, resulting in superior static and fatigue properties are attained for the joint. Assembly of the tube and tube ends is not subject to operator proficiency. Furthermore, the manufacturing tolerance between the tube inner diameter and the outer diameter of the end fitting or member is less critical, reduces dimensions of the tube ends to fit end fitting and further reduces cost.

**Claims**

1. A torque tube assembly comprising a pair of end members (4, 6) interconnected by a tubular member (2), each of said end members having a male extension (20) extending into said tubular member, said male members each having a plurality of axial grooves (10, 12, 14, 16) spaced equidistant circumferentially around said male member with shoulders at the opposite axial ends of said grooves, the inner wall of said tubular member resting on said shoulders, end portions of said tubular member intermediate said shoulders being recessed into said grooves and forming a torque transmitting interconnection therebetween, each of said axial grooves defined by a plurality of straight side walls and a bottom member intersecting said side walls, characterised in that said side walls diverge outwardly from said bottom member and are equally angularly sloped with respect to a vertically disposed plane normal to a horizontally disposed plane passing through intersections of said side walls and an outer surface of said end members, said intersections of said side walls with said outer surface and said bottom member each having a radius, the assembly being such that the torsional strength of the end connection exceeds the torsional strength of the tube.

2. A torque tube assembly, as recited in claim 1, in which the axial length of said grooves (10, 12, 14, 16), between said shoulders is greater than the circumferential width of said grooves.

3. A torque tube assembly, as recited in claim 1 or 2, in which the number of grooves (10, 12, 14, 16) in the end member divided by the outer diameter of the end member (4, 6) is equal to or less than 2.1 divided by the groove width.

4. A torque tube assembly, as recited in any preceding claim, in which the depth of the groove, as measured substantially vertically at the groove edge, divided by the groove width, measured at the bottom of the groove, is equal to or less than 2.

5. A torque tube assembly, as recited in any preceding claim, in which the angular slope (A) of each of the groove side walls is not substantially less than 5° and not substantially more than 60° with said side walls sloping away from said bottom member of the groove, whereby the angle of slope of said groove side walls is selected in accordance with the wall thickness of said tubular member.

6. A torque tube assembly, as recited in any preceding claim, in which the width of said grooves is not substantially greater than 0.45 in (11.45 mm).

7. A torque tube assembly, as recited in any preceding claim, in which the depth of said grooves measured vertically at the groove edge is not substantially less than 0.02 in (0.508 mm) and not substantially greater than 0.10 in (2.54 mm).

8. A torque tube assembly, as recited in any preceding claim in which said intersections of said side walls with said outer surface and said bottom member have a radius between 0.01 and 0.15 inches (0.254 and 3.81 mm).

9. A torque tube assembly, as recited in any preceding claim in which the width of said grooves is not substantially less than 0.15 in (3.81 mm) and not substantially greater than 0.45 in (11.43 mm).

**Patentansprüche**

1. Hohlwellenanordnung zur Drehmomentübertragung

mit zwei durch ein Rohrelement miteinander verbundenen Stirnteilen (4, 6), die jeweils mit einem Einsteckglied (20) in das Rohrelement ragen,

wobei die Einsteckglieder jeweils mehrere axiale Nuten (10, 12, 14, 16) besitzen, die in gleichen Abständen auf ihrem Umfang angeordnet sind und die an ihren entgegengesetzten axialen Ende Schultern aufweisen, auf denen die Innenwandung des Rohrelements ruht,

wobei die Endbereiche des Rohrelements zwischen diesen Schultern in die Nuten eingedrückt sind und eine eine Drehmonmentübertragung ermöglichende Verbindung zwischen ihnen bilden,

und wobei jede der axialen Nuten durch mehrere geradlinige Seitenwandungen sowie einen diese Seitenwandungen schneidenden Boden definiert ist, dadurch gekennzeichnet,

daß die Seitenwandungen von dem Boden nach außen divergieren und mit einer vertikalen Ebene, die auf einer durch die Schnittkanten der Seitenwandungen mit der Außenfläche der Stirnteile verlaufenden horizontalen Ebene senkrecht steht, gleiche Winkel bilden,

daß die Schnittkanten der Seitenwandungen mit der genannten Außenflächen und dem Boden jeweils einen Rundungsradius haben.

und daß die Anordnung so ausgebildet ist, daß die Torsionsfestigkeit der stirnseitigen Verbindung größer ist als diejenige des Rohrelements.

2. Hohlwellenanordnung der Drehmomentübertragung nach Anspruch 1, bei der die axiale Länge der Nuten (10, 12, 14, 16) zwischen den Schultern größer ist als die Umfangsbreite der Nuten.

3. Hohlwellenanordnung zur Drehmomentübertragung nach Anspruch 1 oder 2, bei der die Anzahl der Nuten (10, 12, 14, 16) in dem Stirnteil, geteilt durch den Außendurchmesser des Stirnteils (4, 5) gleich oder kleiner ist als 2,1 geteilt durch die Breite der Nuten.

4. Hohlwellenanordnung zur Drehmomentübertragung nach einem der vorhergehenden Ansprüche, bei der die an den Kanten der Nuten gemessene vertikale Tiefe der Nuten, geteilt durch die am Boden der Nut gemessene Breite der Nut gleich oder kleiner als 2 ist.

5. Hohlwellenanordnung zur Drehmomentübertragung nach einem der vorhergehenden Ansprüche, bei der der Winkel (A) jeder der sich von dem Boden der Nut wegneigenden Seitenwandungen der Nut nicht wesentlich kleiner als 5° und nicht wesentlich größer als 60° ist und in Abhängigkeit von der Wandstärke des Rohrelements gewählt ist.

6. Hohlwellenanordnung zur Drehmomentübertragung nach einem der vorhergehenden Ansprüche, bei der die Breite der Nuten nicht wesentlich größer ist als 0,45 inches (11,45 mm).

7. Hohlwellenanordnung zur Drehmomentübertragung nach einem der vorhergehenden Ansprüche, bei der die vertikale Tiefe der Nut an der Kante der Nut nicht wesentlich kleiner ist als 0,02 inches (0,508 mm) und nicht wesentlich größer 0,10 inches (2,54 mm).

8. Hohlwellenanordnung zur Drehmomentübertragung nach einem der vorhergehenden Ansprüche, bei der die Schnittkanten der Seitenwandungen mit der Außenfläche und dem Boden einen Krümmungsradius haben, der zwischen 0,01 und 0,15 inches (0,254 und 3,81 mm) liegt.

9. Hohlwellenanordnung zur Drehmomentübertragung nach einem der vorhergehenden Ansprüche, bei der die Breite der Nuten nicht wesentlich kleiner als 0,15 inches (3,81 mm) und nicht wesentlich größer als 0,45 inches (11,43 mm) ist.

**Revendications**

1. Ensemble tube de torsion comprenant deux embouts (4, 6) reliés par un élément tubulaire (2), chacun desdits embouts possédant un prolongement mâle (20) qui est engagé dans ledit élément tubulaire, lesdits éléments mâles ayant chacun une pluralité de rainures axiales (10, 12, 14, 16) régulièrement espacées circonférentiellement sur le tour dudit élément mâle avec des épaulements (24, 26) situés aux extrémités axiales opposées desdites rainures, la paroi interne dudit élément tubulaire reposant sur lesdits épaulements, des portions d'extrémités dudit élément tubulaire situées entre lesdits épaulements étant refoulées dans lesdites rainures et formant une liaison de transmission du couple entre les éléments, chacune desdites rainures axiales étant définie par une pluralité de flancs rectilignes et un élément de fond qui coupe lesdits flancs, caractérisé en ce que lesdits flancs divergent vers l'extérieur à partir de l'élément de fond et sont inclinés d'angles égaux (A) par rapport à un plan disposé verticalement normal à un plan disposé horizontalement qui passe par lesdites intersections que lesdits flancs forment avec une surface externe desdits embouts, lesdites intersections des flancs avec ladite surface externe et avec ledit élément de fond ayant chacune un rayon d'arrondi, l'ensemble étant tel que la résistance à la torsion de l'assemblage d'extrémité soit supérieure à la résistance à la torsion du tube.

2. Ensemble tube de torsion selon la revendication 1, caractérisé en ce que la longueur axiale desdits rainures (10, 12, 14, 16) mesurée entre lesdits épaulements, est supérieure à la largeur circonférentielle desdites rainures.

3. Ensemble tube de torsion selon l'une des revendications 1 et 2, caractérisé en ce que le nombre des rainures (10, 12, 14, 16) de l'embout d'extrémité, divisé par le diamètre extérieur de l'embout (4, 6) est égal ou inférieur à 2,1 divisé par la largeur des rainures.

4. Ensemble tube de torsion selon l'une quelconque des revendications précédentes, caractérisé en ce que la profondeur des rainures, mesurée sensiblement verticalement au bord des rainures, divisée par la largeur de la rainure, mesurée au fond de la rainure, est égale ou inférieure à 2.

5. Ensemble tube de torsion, selon l'une quelconque des revendications précédentes, caractérisé en ce que la pente angulaire (A) de chacun des flancs des rainures n'est pas sensiblement inférieure à 5° ni sensiblement supérieure à 60°, les flancs des rainures s'inclinant en s'éloignant l'un de l'autre à partir de l'élément de fond de la rainure, l'angle de pente desdits flancs des rainures étant choisi en fonction de l'épaisseur de paroi dudit élément tubulaire.

6. Ensemble tube de torsion selon l'une quelconque des revendications précédentes, caractérisé en ce que la largeur desdites rainures n'est pas sensiblement supérieur à 11,45 mm (0,45 pouce).

7. Ensemble tube de torsion selon l'une quelconque des revendications précédentes, caractérisé en ce que la profondeur desdites rainures mesurée verticalement au bord des rainures, n'est pas sensiblement inférieure à 0,508 (0,02 pouce) ni sensiblement supérieure 2,54 mm (0,10 pouce).

8. Ensemble tube de torsion selon l'une quelconque des revendications précédentes, caractérisé en ce que lesdites intersections que lesdits flancs forment avec ladite surface externe et avec ledit élément fond ont un rayon d'arrondi compris entre 0,254 et 3,81 mm (0,01 et 0,15 pouce).

9. Ensemble tube de torsion selon l'une quelconque des revendications précédentes, caractérisé en ce que la largeur desdites rainures n'est pas sensiblement inférieure à 3,81 mm (0,15 pouce) ni sensiblement supérieure à 11,43 mm (0,45 pouce).

Fig. 1

Fig. 2

Fig. 3

Fig. 3A

Fig. 3B

1